# EUROPEAN PATENT APPLICATION

(11) **EP 4 600 919 A1**
(43) Date of publication of application: **13.08.2025**
(21) Application number: 24156966.4
(22) Date of filing: 10.02.2024
(51) Int. Cl.: G06V 20/52, G08B 21/02, G06V 40/20, A63B 69/00

(54) **METHOD FOR MONITORING SAFEGUARDS OF A CLIMBING WALL AND A SYSTEM FOR THIS METHOD**

(71) Applicant: RECLIMB Prosta Spolka Akcyjna, 20-023 Lublin (PL)
(72) Inventor: Pery, Marcin, 00-151 Warszawa (PL)
(74) Representative: Wroblewski, Marcin Jan

(57) **Abstract**

The object of the invention is method for monitoring safeguards of a climbing wall (1). In said method the climbing wall (1) with the belay area are monitored by at least one camera (2), and the image from this camera (2) is transmitted to a processing and control unit (3) connected to a database (4).

Subsequently, the images from the camera (2) are analysed with at least an image processing algorithm, and messages selected from light-based, acoustic or digital messages are generated as a result of this analysis.

The database (4) stores correct and incorrect safety patterns on the climbing wall (1), and the processing and control unit (3) is configured to process the image from the camera (2) and assess the safety of the users (8) of the climbing wall (1), by the identification and extraction of patterns and their comparison with the patterns collected in the database (4).

## Description

The object of the invention is method for monitoring safeguards of a climbing wall, applicable for ensuring an adequate level of safety for all the users of the climbing wall.

In prior art, from KR1020220056967A there is known a system and method for assessing the progress of persons practising climbing on artificial walls, based on depth-sensing cameras and image assessment utilising image processing. The purpose of the system is to precisely follow the position and arrangement of the bodies of climbers present on a climbing wall, onto which images from at least two projectors are being projected. The primary objective fulfilled by the system is to ensure the efficiency of exercises and provide the users with entertainment, by a screen climbing system in the form of a game which displays a climbing route by displaying images on a wall with climbing holds, or by introducing additional forms of competition, for example in the form of a score accrued by touching or holding a hold in a specific location. This system uses projectors, depth-sensing cameras and reference cameras, wherein the images projected by the projectors may overlap. In particular, the reference cameras are used to align and correct the holds located in the part, in which the adjacent images from the projectors overlap, and to trace the position and the arrangement of the climbers' bodies in this part of the climbing wall. The method uses the principles of measurement and correction of the position, resulting from differences in size and in the distance between the projector and the depth-sensing camera. The calculations use the calculation of the difference between the actual position of the hold, a cloud of points photographed by the depth-sensing camera, and the position of a reprojected texture image. Measurement data can be used for any stopping coordinate, it also being possible to use the data of a cloud of points collected arbitrarily from the centre of the projected image. Specific positions, for example the position of a bolt which is to be attached to the centre of the hold or the wall, may be extracted from the image acquired from the depth-sensing camera by image processing comprising contour extraction following image binarisation, or it is possible to use the extraction and identification of any colours different from the colours of the holds. The system and method implement precise mapping between real space and a three-dimensional area, also ensuring high accuracy when identifying the users and the holds.

KR20220056967A discloses the application of machine learning while analysing the camera image on climbing walls. The image analysis is used to supply information about climbing routes. First, photographs of an artificial climbing wall are taken so that all the holds of the climbing wall are visible on the photographs. The photographs collected in this manner are analysed with the use of machine learning in terms of the types, sizes and positions of the holds present on the climbing wall. The holds are also analysed on the basis of information from the users regarding the existing climbing routes and the difficulties associated with them. The collected information about the climbing routes may be categorised and assigned a difficulty level, from beginner, on to intermediate, and up to the advanced level. The data collected in this manner may also be associated with a specific climbing centre. In the next step, photographs of the climbing wall are taken during the climb. These photographs are also analysed with the use of machine learning. During this analysis, a skeleton vector is identified, meaning the coordinates of the arms, elbows, shoulders, knees and feet of the climbers. The collected data on the climbers are used to assess their progress. On the other hand, if difficulties arise while climbing over the climbing route, the climber may send a proper inquiry to the system. On the basis of the climber's photographs and earlier photographs of the climbing wall, the system displays an image corresponding to the received information about a problem on the artificial climbing wall by means of a projector. In particular, the projector may display a programmed solution to the problem existing on the climbing route, marking the consecutive climbing holds with circles, and displaying a path connecting the holds.

EP4217982A1 discloses a safety system used on climbing walls. The safety system is meant to monitor and detect dangerous situations, for example such as exceeding a predetermined height without a harness. In this system, the analysis is based on an image from thermal imaging cameras, as well as on the use of readers and tags in the radio-frequency identification technology-RFID-connected to a server. The system monitors the areas of a climbing wall in which it is necessary to use safeguards. The monitoring comprises two steps. The first step is the detection of a person in the designated zone. This is executed by a thermal imaging camera allowing the detection of a user's entry into the monitored area on the basis of the temperature. In the second step, it is checked whether the person who is present in the designated zone has safeguarding means provided with proper identifiers. Therefore, the climbing wall uses safety means provided with identifiers in the form of RFID tags and the receivers of these radio signals. For example, the monitored safety means is the carabiner of an auto belay system. The safety system also has light-based and acoustic means for signalling the safety status. In a situation when the system detects a climber exceeding a predetermined height, and at the same time the radio signal receiver is reading the signal from the carabiner of the auto belay system, it is a safe condition, which is signalled by a green light. On the other hand, if the climber exceeds a predetermined height, and the safety means are not identified, then it is a dangerous condition, which is signalled with a red light and an acoustic warning alarm. The warning signal may also be transmitted by the server to a communication device of the climbing wall personnel, informing them that the climber is climbing under dangerous conditions. The climbing wall personnel may immediately react to dangerous situations. The system also allows for monitoring numerous various climbing routes provided with auto belay systems at the same time. In such a case, unique RFID tags are associated with every auto belay system. The radio signal receiving unit is then adjusted to detect any number of various RFID tags, or it may determine whether a tag which is not associated with a specific climbing route has been detected. The climbing wall personnel may then monitor multiple points or climbing routes, and additionally, the personnel do not have to be personally present in these places.

The purpose of the invention is to increase safety on artificial climbing walls, and to ensure a high safety level of all climbing wall users, regardless of their training level and advancement, and to eliminate the necessity to additionally mark the climbing equipment.

The invention relates to a method for monitoring safeguards of a climbing wall, in which a climbing wall with a belay location is monitored by at least one camera, and the image from this camera is transmitted to a processing and control unit connected to a database, followed by an analysis of the images from the camera at least with an image processing algorithm, and, as a result of this analysis, messages selected from light-based, acoustic or digital messages are generated. The essence of the invention is in that
- correct and incorrect safety patterns on the climbing wall are stored in the database,
- and the processing and control unit is configured to process the image from the camera and assess the safety of the users of the climbing wall, by the identification and extraction of patterns and their comparison with the patterns collected in the database.

In this description, a belay location is to be understood as an area below the climbing wall, where the person belaying the climber is standing.

The key advantage is to base the safety assessment on an image analysis. This allows for the elimination of additional equipment necessary to monitor safety, and for acquiring a highly credible image of the situation concerning safety on a climbing wall. Safety can be provided for all the users of the climbing wall, regardless of their level of advancement. The monitoring of safety with the use of cameras and image analysis makes it possible to extract from the image the specific elements of the equipment and behaviours necessary to be monitored, constituting a hazard for the climber themselves and other persons present on the climbing wall. In contrast to known solutions dedicated to climbing walls, the invention allows for very easy identification of basic situations entailing the highest danger, such as the lack of a harness, or covering the harness with clothes. This is achieved by the identification and extraction of items and their properties affecting the safety of persons climbing the climbing wall in a digital image. The items, their properties, or specific behaviours on the climbing wall are saved in the database as safety patterns: correct and incorrect ones. In particular, the image processing algorithms may distinguish climbing ropes, knots on climbing ropes, harnesses and their parts as well as carabiners and other climbing equipment. This also allows for preventing simple human errors which can result from routineness. Said identification and extraction from digital images allow for monitoring the correctness of the knots tied and used, for example belay knots, as well as the tying of a knot at the very end of the rope held by the belaying person. It is also possible to check the arrangement of the rope during the climb, preventing incidents resulting from mistakes made during the climb itself, like incorrect repositioning of the rope, resulting in the rope extending behind the climber's calf, which may result in an upside down fall after falling from the wall, or from mistakes made during the belaying, like, for example, keeping both hands above the belay device.

Preferably, the processing and control unit uses deep machine learning, preferably artificial neural networks taught by means of at least one of the methods chosen among the following methods:
- expert-based, involving the marking and categorisation of the recorded images, including the images and films from climbs on the climbing walls; The advantages of the expert-based methods include:
   ∘ an improvement in precision and efficiency, resulting from manual marking by experts, ensuring high quality of the data, which is the key to successful learning of a neural network, while precise and detailed markings allow the network to better understand and interpret the data,
   ∘ taking advantage of specialised knowledge in the field; the experts may provide detailed markings in their fields, for example with respect to the correctness of less popular knots and techniques used in belaying, or less known belay devices,
   ∘ reduction of noises and errors, since precise marking by experts reduces the number of noises and errors in the data considerably, which is important for the overall efficiency of the model,
   ∘ better identification of subtle patterns, since experts may identify subtle features and patterns in images, which may be omitted by automatic marking methods;
   ∘ support for learning with a small amount of data, since in cases when limited amounts of data are available, precise markings by experts may considerably increase the efficiency of learning, enabling effective training of the models even with smaller datasets,
   ∘ diversification and quality of data, because expert-based methods allow for creating a diverse dataset with high quality of markings, due to which the models may provide better generalisation and cope in various scenarios,
   ∘ faster convergence in learning due to the fact that precise markings may accelerate the learning process of a neural network, since a model may understand dependences in the data more quickly,
   ∘ better interpretability and diagnosability of the models; due to precise markings, it is easier to understand why a model makes certain decisions.
- automatic, involving the teaching of the models by means of images along with a description of the taught patterns generated by simulation systems, creating various climbing and belaying scenarios on the climbing wall, including those taking into account various angles of view of the cameras; The advantages of the automatic methods include:
   ∘ scalability and availability of the data, since automatic methods may generate large amounts of teaching data, which is crucial in the training of deep neural networks, while simulation systems may create an unlimited number of scenarios and images,
   ∘ adjustment to specific requirements, because simulation systems may be programmed to generate data, which precisely fit the specific needs and requirements of the model, enabling the adjustment of the teaching data to the specifics of this task,
   ∘ diversification and complexity of the data, since simulation systems may create complex and diversified scenarios, which may not occur frequently in reality, helping the models to better cope in various, unpredictable situations, for example in situations of hypothetical safety threats on the climbing wall, which cannot be recreated under real conditions due to safety itself,
   ∘ acceleration of the learning process, since automation of the data generation process may accelerate the learning process considerably, because it does not require time-consuming manual marking of the data,
   ∘ reduction of human errors, since automatic generation of data reduces the risk of human errors which may occur during manual marking,
   ∘ testing and validation of the models, due to simulations enabling the performance of intense tests and validation of the models under controlled, but diverse conditions, which is crucial in assessing the efficiency and reliability of the models,
   ∘ fast iteration and optimisation, since the ability to quickly generate various data allows for frequent iterations and optimisation of the models, which accelerates the development and improvement of the efficiency of the neural networks,
   ∘ cost reduction, since automatic generation of data is cheaper than collecting and marking real data, in particular on a scale needed to train advanced models.
- semiautomatic, involving motion capture methods or methods of reprojection over images from other cameras. The advantages of the semiautomatic methods include:
   ∘ realistic data resulting from the use of motion capture ensuring very realistic data, which is particularly useful for reflecting the motions of the climber and the belayer,
   ∘ the abundance of details, allowing for the acquisition of detail-rich data, which may comprise subtle aspects of motion and interaction, unobtainable when using traditional automatic data generation methods,
   ∘ improved precision, since reprojection of images from various cameras may improve data precision and perspective considerably, which is crucial in precise identification and analysis of the situation on the climbing wall,
   ∘ reduced costs and time compared to a full simulation, since semiautomatic methods are cheaper and faster to implement compared to full simulations, at the same time offering more control over the data than entirely automatic methods,
   ∘ complementing the data with the human perspective; motion capture allows for the inclusion of the human perspective and intuition in the data generation process, which may be particularly useful for modelling the interactions between the climber and the belayer,
   ∘ better generalisation under various conditions, since the use of data from various cameras and perspectives allows for better training of the models, so that they would cope in various environments and lighting conditions,
   ∘ high quality of data directly from the real world, since the data acquired in this manner are a direct reflection of reality, which ensures their high quality and usefulness in the learning process.

Due to this, on the basis of real situations and situations simulated in automatic and semi-automatic methods, it is possible to broaden the possibilities of the identification and extraction of items and their properties affecting the safety of the persons climbing the climbing wall. The use of image processing algorithms working basically with no human participation to this end allows for ensuring the safety of all the users of a climbing wall under camera surveillance. In particular, expert-based methods record and categorise more than several hundred images for each significant analysed element responsible for safety, especially in the form of films recorded while passing the climbing walls. This enables safety-ensuring teaching of the artificial neural networks on the basis of learning models used alternatively or supplementarily.

It is especially advantageous when the processing and control unit identifies and extracts at least one item chosen from a group comprising: a climbing harness with a central connector, a belay device, belay points, a top belay station, and an auto belay belt carabiner. An analysis of the safety patterns associated with these items ensures basic control of safety regardless of the practised type of climbing. A belaying harness must be worn by each climber intending to climb to a height exceeding 3 metres. Obviously, incorrect use of belay devices or incorrect fastening of a rope thereto constitutes a very high risk for the climber. Monitoring the correctness of the actions associated with the belay device limits the risk of accidents on climbing walls considerably. In the event of a bottom belay, omitted fastening of the rope into the belay points results in a risk of a long fall when falling from the climbing wall, which increases the risk of injury or trauma considerably. The monitoring of these points increases safety, while fast detection of these incidents and equally fast provision of information about them, for example by an acoustic or visual warning, allows for immediate correction of errors and undesired behaviours. The identification and extraction of these items also allow for detecting symptoms of their excessive wear, especially such as improperly closed carabiners or abrasion of the climbing harness and the belts.

It is also appropriate when the database collects and stores the correct patterns of: belay knots for tying the rope, tying the rope into the upper and lower link of the harness, fastening the rope into the belay device, holding the belay device, fastening the rope into the consecutive belay points, tying the rope into the top belay station, and the processing and control unit is adjusted to identify and extract these patterns from a digital image from the camera. This allows for monitoring the key aspects related to safety. For example, it is possible to extract and identify correct patterns of belay knots, while checking whether a properly tied knot has been used, for example a figure-eight loop, and whether such a knot reaches the harness connector like it should, and whether the end of the rope has a proper minimum length. It is also possible to monitor whether the rope has been tied into the upper and lower link of the harness, instead of into only one of them, or whether the climber is not missing the belay points where they should fasten the rope. All these patterns can be identified in images from the cameras monitoring the climbing wall, which increases the safety considerably, since these basic patterns should always be monitored by the climbing partner.

It is also appropriate when:
- the correctness of tying the rope into the climbing harness or fastening the rope into the belay device is extracted and identified from the digital images from the cameras on the climbing wall and in the belay location;
- the climber's figure is extracted and identified from the digital image from the cameras, and at the same time the correctness of fastening the rope in the consecutive belay points extracted and identified from the digital images from the cameras over the entire height of the climbing wall, as the climber advances along the height of the climbing wall;
- the figure of the belaying person is extracted and identified from the digital image from the cameras, and the correctness of holding the belay device is being continuously extracted and identified.

Due to such actions, the monitoring of safety on climbing walls may take into account additional aspects like the time, the place and the circumstances. The result is that, for example, the correctness of tying a rope into a climbing harness or fastening a rope into a belay device can be monitored still before the start of the climb, and the climbing of persons with irregularities in the safeguards can be prevented, while the fastening of the climber into the consecutive belay points can be monitored during the climb. In addition, the behaviour of the belaying person can be monitored at all times.

Preferably, in the event of detecting an incorrect safety pattern, the processing and control unit saves the place, the time and the context of detecting this incorrect safety pattern. The collection of images from the detected incorrect safety patterns along with their circumstances allows for better understanding of dangerous incidents and for introducing further improvements limiting the risk while practising climbing on artificial walls. Image identification algorithms may be applied to the collected images, for example to check whether external factors contributed to a dangerous incident, like, for example, the distraction of the belaying person by a telephone or another mobile device. In such circumstances, the image identification algorithms may easily check the collected data in search for specific items, in this particular case a telephone.

Equally preferably, the processing and control unit transmits images of the climbing wall and the users to a remote server, wherein on the remote server the patterns are additionally analysed, and in particular the figures of climbing wall users as well as the items and their properties affecting the safety of the persons climbing the climbing wall are extracted and identified. Correct and incorrect safety patterns are collected on the remote server and used to continuously improve the patterns of the database. Due to such an operating pattern, it is possible to collect and analyse the data globally, from numerous different climbing walls. This considerably increases the set of available data, with which the machine learning algorithms may work. Over time, this may considerably streamline the operation and the response of automatic systems to dangerous situations. This also results in the possibility to update local databases of individual climbing walls on the basis of the data collected globally. The patterns of items, situations or behaviours assessed as safe and as dangerous may be generated on the remote server.

It is also appropriate when the processing and control unit transmits images of the climbing wall and the users to the remote server in real time, and the remote server is supplementarily configured to process the image from the camera and assess the safety of the persons climbing the climbing wall. As a unit having higher computing power, the remote server may analyse the images transmitted in real time more quickly. However, faster calculations ensured by the remote server require a constant internet connection and data transmission. When analysing images for a specific climbing wall, the processing and control unit guarantees its safety regardless of the status of the internet connection, and the connection to the remote server. Therefore, through the basic operation of the processing and control unit, such configuration enables continuous assessment of the safety of climbing wall users, with the ability to accelerate the image analysis by means of the remote server.

It is preferable when the figure of the belaying person and the characteristics representing fatigue or the lack of concentration of the belaying person present in the belay location at the base of the climbing wall are extracted and identified from the digital image during the identification of safety. This allows for quick identification of progressive fatigue, which may be particularly dangerous, since it is usually accompanied by problems with concentration. This directly translates into problems with correct belaying, which should follow the actions taken by the climber. The belayer's lack of readiness for a quick response may have disastrous effects. This is especially true considering that, apart from constant observation of the climber, the belaying person must pay attention to a proper stable position, the grip on the rope and the operation of the belay device. The detection of increasing fatigue of the belaying person should result in a proper signal on the climbing wall, and a break for the climbing team.

It is also appropriate when, if an incorrect safety pattern is detected, the processing and control unit transmits digital information to the mobile devices of the climbing wall personnel. This is achieved by an additional level of safeguarding on climbing walls. The climbing wall personnel may be notified by messages displayed on virtually any mobile devices, such as telephones and smartwatches, or on devices dedicated to climbing walls, following identical principles.

It is equally preferable when the processing and control unit controls the lighting assigned to climbing routes and the sound sources, and in the event of:
- detecting an incorrect safety pattern, the processing and control unit at least switches the lighting to red and generates an acoustic warning,
- detecting a correct safety pattern, the processing and control unit at least switches the lighting to green, or to another predetermined colour different from red.

This allows for achieving very simple and clear communication with the climbing wall users. In particular, using the colours of signals encountered inter alia in road traffic results in achieving clear signals for the users.

It is appropriate when the artificial neural networks:
- are first taught to identify: the belay location, the belayer, the climber, the belayer's harness, the climber's harness, the rope, the belayer's device, the central connector of the belayer's harness, the loop of the climber's harness for tying the rope, the central connector of the climber's harness for fastening the auto belay belt carabiner, the belay points along the climbing route together with quickdraws and/or carabiners,
- and subsequently they are taught the safety patterns and the interdependencies between the items used to safeguard the climbing on climbing walls.

Such a learning system of the neural networks has the following advantages:
- gradual learning from the ground up; beginning with the identification of specific elements, a neural network gradually learns to understand and identify each component separately, which is the basis for understanding more complex patterns and relationships,
- a strong basis for complex analyses; understanding the individual elements is necessary to analyse complex safety patterns, because without precise knowledge about the individual components, it would be difficult to identify their correct or incorrect use,
- high precision in the identification of elements, since precise identification of individual elements increases the overall precision of the system, which is crucial in the context of safety on a climbing wall,
- better understanding of interdependencies, where, having learned to identify specific elements, the network may better understand how these elements cooperate with each other, which is crucial in assessing the safety of the entire belaying system,
- avoiding mistakes by early identification of incorrectnesses, since early identification of incorrectnesses in specific components may help to avoid errors under more complex conditions, situations and scenarios of incidents on a climbing wall,
- facilitating real-time monitoring and safety assessment, and a neural network trained in this manner may be used for real-time monitoring and safety assessment, quickly identifying potential threats or incorrect use of the equipment,
- the ability to integrate with other safety systems; following the training of a network in this specific field, it can be integrated with other safety systems on the climbing wall, creating more comprehensive and efficient solutions.

The invention also relates to a system configured to execute the safeguard monitoring method for a climbing wall according to the described features. It is a system adjusted to implement the method.

Preferably, the system has at least one camera with a minimum recording standard in HD quality, a processor constituting a part of the processing and control unit, a hard drive constituting the database, and a set of warning devices comprising a light source, a speaker and a display. Such devices provide the possibility to use the method according to the invention, and additionally, this set of devices does not generate excess costs during purchase and servicing.

It is advantageous when the system has means for the communication and transmission of digital signals, in particular means for wireless communication with other devices, in particular with mobile devices. Due to this, the devices may constitute a part of larger systems and communicate with other devices.

The invention is presented in embodiments and in the drawing, in which:
fig. 1 presents a flowchart of a safeguard monitoring method for a climbing wall;

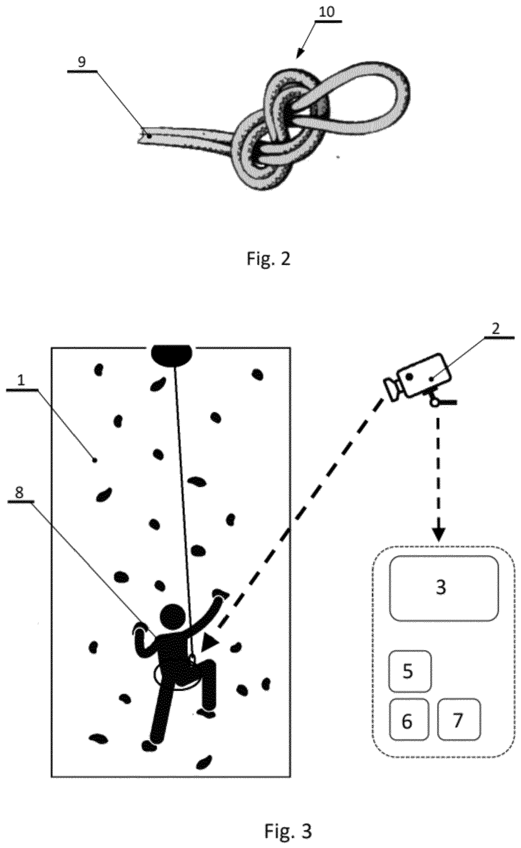

fig. 2 presents an example of a figure-eight loop knot as an identified and extracted safety pattern;
fig. 3 - fig. 5 present a safeguard monitoring method for a climbing wall;
fig. 6 presents a flowchart of a safeguard monitoring method for a climbing wall with a remote server.

### The first embodiment

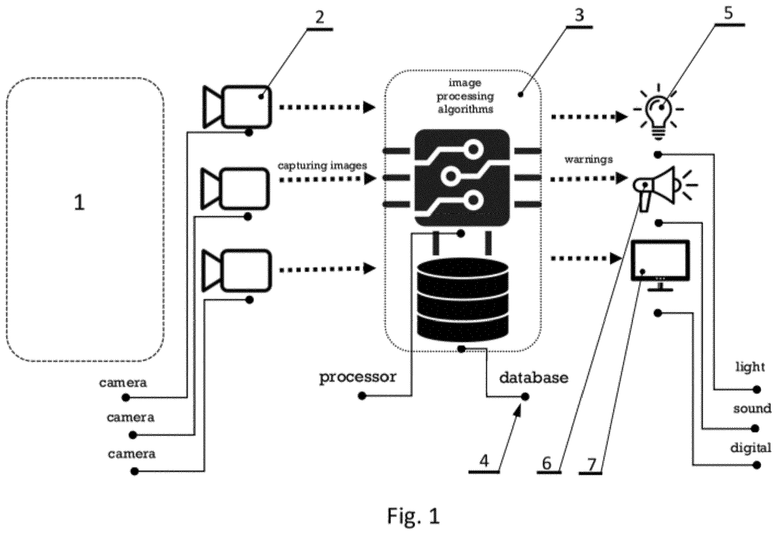

Method for monitoring safeguards of a climbing wall 1 has been implemented on a climbing wall 1 having a system configured to execute this method. The safeguard monitoring method is implemented with the use of this system, and in accordance with the diagram (fig. 1), according to which:
- the climbing wall 1 with the belay location is monitored by cameras 2 with resolution of the recorded image in accordance with the UHD standard, that is with resolution of 3840 x 2160 pixels, and with a parameter of 60 frames per second, fps;
- the image from these cameras 2 is transmitted to a processing and control unit 3 provided with a processor and implementing in real time an image processing algorithm utilising deep machine learning, the processing and control unit itself being connected to a database 4 located on a local hard drive,
- an analysis of images from the cameras 2 is performed in the processing and control unit 3 while identifying and extracting safety patterns from the images of the cameras 2, and especially specific items and their properties, as well as human figures;
- and as a result of this analysis, messages are generated, which are usually warnings using the following to this end: lamps 5, speakers 6 and displays 7 present on the climbing wall 1.

The images of correct and incorrect safety patterns on the climbing wall 1 are stored in the database 4. The collected images are utilised by the image processing algorithm, and for it they constitute a base of comparative images. The database 4 is also used to collect correct safety patterns. Over time, the result of analysing the images from the cameras 2 and identifying the items and their properties responsible for safety, or the individual incidents which took place on the climbing wall 1, may be saved in the database 4. This broadens the range of comparative data, with which the image identification algorithms may work.

Deep machine learning with artificial neural networks has been used. The neural networks were taught by means of two methods:
- the expert-based method, involving the marking and categorisation of the recorded images, including the images and videos from climbs on the climbing walls;
- automatic, involving images along with a description of the taught patterns generated by simulation systems, creating various climbing and belaying scenarios on the climbing wall 1, including those that take into account various angles of view of the cameras 2;

In the expert-based method, for each analysed item responsible for safety on the climbing wall 1 and for each analysed pattern, over eight hundred videos or photographs were collected from climbs on the climbing walls 2. All the collected data were properly categorised and marked. On the other hand, in the automatic method, various incidents were simulated on the climbing wall 1, and in particular the same incidents forming safety patterns were simulated while taking into account various angles of view of the cameras 2, which corresponded to various possibilities of mounting the cameras 2 on the climbing walls 1.

In order to ensure optimal performance of the artificial neural networks, these artificial neural networks were first taught to identify the items, places and figures associated with safety on the climbing wall 1. The neural networks were taught to identify: the belay locations, the belayer, the climber, the belayer's harness, the climber's harness, the rope 9, the belayer's device, the central connector of the belayer's harness, the loop of the climber's harness for tying the rope, the central connector of the climber's harness for fastening the auto belay belt carabiner, the belay points along the climbing route together with quickdraws and carabiners. Subsequently, the neural networks were taught to identify the safety patterns and the interdependencies between items used to safeguard the climbing on climbing walls.

The input data for teaching these networks include:
- colour photographs and videos with the highest possible resolution, and with the highest possible number of frames per second, presenting the various aspects of climbing, including the belay equipment, the climbers, the belayers, the belay locations as well as various climbing scenarios and techniques,
- motion capture data, including data from motion capture systems used for modelling the motions of the climber and the belayer, which allows for better understanding of the climbing dynamics and interactions,
- simulation data, which means simulations of various climbing scenarios which may include various conditions, belay techniques and climbing styles, in the form of photographs and videos, most preferably in colour, with the highest possible resolution and with the highest possible number of frames per second,
- anonymised real data; data originating from real climbing walls, including information about the manner of using the equipment and the climbers' behaviour,
- data marked manually by experts, for example indicating various belay elements and their correct or incorrect use, identifying specific elements of the equipment, their placement and possible incorrectness,
- textual data, including descriptions of climbing techniques, instructions concerning safety, protocols for handling various situations serving as contextual information facilitating the understanding of visual data,
- feedback from the experts, including opinions and commentaries from experienced climbers and instructors, which may help to adjust and validate the model,
- data from sensors placed on the equipment or on the climbers may provide additional information, for example about forces exerted on the equipment, positions of the body, and other physical parameters,
- information about the condition of the surroundings, such as the lighting, the weather or the climbing wall type, which may affect the conditions existing on the climbing wall.

On the other hand, the specific output data of a model taught in this manner include inter alia:
- the identification of equipment elements with a vector of pairs of enumerated values defining specific elements of the climbing equipment, such as harnesses, ropes, carabiners, quickdraws, belay instruments, central connectors, etc., along with spatial coordinates indicating the location of each identified equipment, for example in the following format:

i, xᵢ, yᵢ, zᵢ

where:
i stands for the type of the detected equipment, while (xᵢ, yᵢ, zᵢ) - the spatial coordinates of this equipment, meaning:

| | |
|---|---|
| a figure-eight loop knot 10: | 10, x₁₀, y₁₀, z₁₀ |
| carabiner n: | n, xₙ, yₙ, zₙ; |

- assessment of the correct use of the equipment, in which a binary value interpreted as assessment of the correct use of the equipment is added to each identified equipment along with spatial location:
identified equipment, correctness assessment
wherein the correctness assessment uses:
   0-incorrectly,
   1-correctly,
for example:
   i, 1
where:
   i stands for the detected equipment
   1 is the correctness assessment; equipment used correctly;
meaning:
   10, 0
where:
   a figure-eight loop knot 10,
   0 is the correctness assessment, equipment used incorrectly, knot tied incorrectly carabiner n, 1
where:
   carabiner n,
   1 is the correctness assessment, equipment used correctly; correctly closed;
- the identification of belay points; the network identifies and assesses the correct use of belay points in the form of a vector of pairs indicating the location of a given point, and the correctness of use, analogically to the assessment of the correct use of the equipment described above.

In particular, the database 4 collects and stores the correct patterns of: belay knots for tying the rope, tying the rope into the upper and lower link of the harness, fastening the rope into the belay device, holding the belay device, fastening the rope in the consecutive belay points, tying the rope into the top belay station, as well as output data from the teaching of artificial neural networks. The processing and control unit 3 is adjusted to identify and extract these patterns from the digital image from the camera 2. They are the key aspects of monitoring and ensuring safe use of the climbing wall 1. Depending on the situation on the climbing wall 1, an analysis of images from the cameras 2 may only use some of the stored patterns, or all the collected safety patterns may be used.

The processing and control unit 3 is configured to process the image from the cameras 2 and assess the safety of the users 8 of the climbing wall 1. In the digital image of the climbing wall 1, the image processing algorithm in the processing and control unit 3 identifies and extracts items and their properties affecting the safety of the users 8 of the climbing wall 1, meaning, inter alia, the persons climbing the climbing wall 1. The performance of safety assessment is based on the safety patterns collected in the database 4.

An exemplary item identified and extracted from the digital image of the climbing wall 1 is a rope 9. Among other things, one property and pattern of the rope affecting the safety of using the climbing wall 1 is the correctness of tying the safety knots. Images of the correct pattern of the "figure-eight loop" knot 10 used in climbing, used to connect the rope to the climbing harness, are saved in the database 4. According to the embodiment, on the climbing wall 1 there is a condition of using this knot to connect the rope to the climbing harness. An incorrectly tied "figure-eight loop" knot 10 or other knots are unacceptable.

In the embodiment, the safeguard monitoring method is implemented for a climber 8 using a top belay with an auto belay device. In this example, the cameras follow the user 8 - the climber, already from the moment of approaching the wall, and in particular they observe the area where the rope 9 is connected to the climbing harness. The image from the cameras 2 is analysed in the processing and control unit 3 in terms of whether there is a correctly tied "figure-eight loop" knot 10 in the area of connection of the rope 9 to the climbing harness. If the "figure-eight loop" knot 10 is tied correctly, then the lamp 5 controlled by the processing and control unit 3 illuminates green. If the "figure-eight loop" knot 10 is not tied correctly, or another knot is present, then the lamp 5 illuminates red, meaning a dangerous condition and the necessity to stop the climb. Then, an acoustic warning is also generated, and the display 7 presents a proper message.

In addition, the image from the cameras is analysed in terms of whether the auto belay belt carabiner is correctly fastened into the knot on the rope 9. The identification and extraction of incorrect fastening of the auto belay belt carabiner, for example an improperly closed carabiner, causes the processing and control unit 3 to generate a warning.

In this embodiment, the devices used are distributed in various places of the climbing wall 1. The cameras 2 are installed to the top, to the sides and to the bottom of the climbing wall 1, in order to obtain a full view of the climbers and the equipment. Moreover, apart from fulfilling the parameters of high resolution UHD and the number of frames per second, the cameras 2 are provided with wide-angle lenses, optical and digital zoom, and the ability to rotate. Moreover, the cameras 2 have motion and position sensors, using motion capture for monitoring the motions and positions of the climber and the belayer.

### The second embodiment

Method for monitoring safeguards of a climbing wall 1 in a second embodiment has been implemented on a climbing wall 1 identical to the climbing wall of the first embodiment.

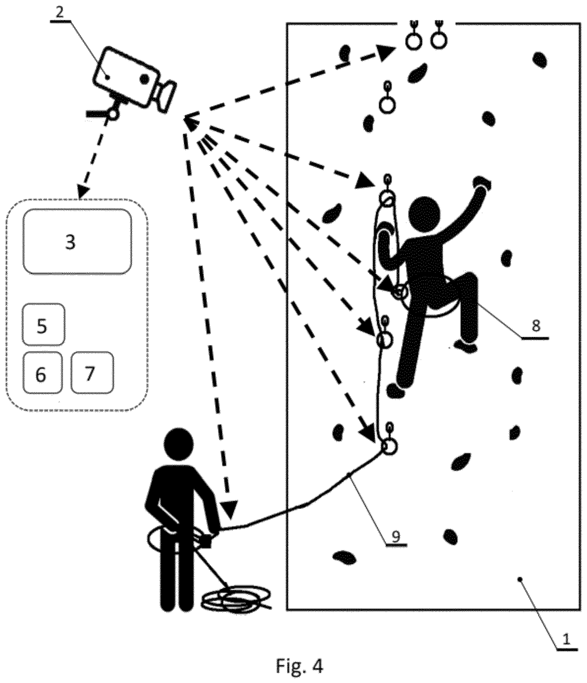

The differences are in the operation of the processing and control unit 3, which in this embodiment assesses the safety of a two-person climbing team (fig. 4), in which the climber climbs with a bottom belay.

The processing and control unit 3 uses deep machine learning with artificial neural networks. The neural networks were taught by means of two methods:
- the expert-based method, involving the marking and categorisation of the recorded images, including the images and videos from climbs on the climbing walls;
- semiautomatic, involving motion capture methods or methods of reprojection over images from other cameras.

The semiautomatic methods in particular use methods for capturing the entire motion of the users of the climbing wall 1, the so-called full body motion capture technology. Moreover, they use reprojections of the users' 8 image over images acquired from other cameras than the users' 8 image.

In the image from the cameras 2, the processing and control unit 3 extracts the users 8 of the climbing wall 1, meaning the climbing person and the belaying person. For safety assessment purposes, the processing and control unit 3 identifies and extracts the following from the image from the cameras 2:
- the belayer's belay device,
- the consecutive belay points on the climbing wall 1, where the rope should be fastened,
- the climber's climbing harness.

The identified and extracted items are compared to the safety patterns in the database 4. For the entire duration of the climb, it is assessed in the image from the cameras 2 whether the rope 9 is correctly fastened into the belay device, and whether the belaying person is holding the rope 9 placed below the belay device. Analogically to the first embodiment, the identification of a failure to fulfil these requirements in the image from the cameras 2 causes activation of an alarm, that is, switching the lamp 5 to a red light and generating an acoustic warning by the speaker 6 and a message on the display 7.

The same principle is used to check whether the climber correctly fastens the rope 9 into each consecutive belay point on the climbing wall 1, as the climb progresses. The identification and extraction of the omitted belay points in the image from the cameras 2 cause the activation of an alarm.

The climber's harness with the central connector is also checked at all times. Like in the first embodiment, it is monitored whether the rope 9 is correctly tied into the links in the harness. Obviously, if the processing and control unit 3 does not identify a climbing harness, an alarm will also be activated. Not only does this allow for detecting complete absence of the climbing harness, but also the unacceptable situations of covering the climbing harness with a t-shirt or a sweatshirt.

Supplementarily, the following can be identified and extracted from the images from the cameras 2:
- climbing carabiners, checking in the image from the cameras 2 whether the climbing carabiner is correctly fastened into the belay point, that is, for example, whether the carabiner has a properly closed lock, or whether it is fastened in a correct direction relative to the rope, that is, whether it is fastened into the rope not to the side of the lock; the identification and extraction of a climbing carabiner with an incorrectly closed lock or an incorrectly fastened climbing carabiner will cause the activation of an alarm;
- the stance and position of the belaying person, as well as the visible symptoms of fatigue and the lack of concentration; if a belaying person is identified and extracted too far from the climbing wall, sitting, or talking on a telephone, the processing and control unit 3 will activate an alarm,
- the climbing harness itself, assessing is condition, the identification and extraction of abrasions of the fabric causing the activation of an alarm.

In this embodiment, the image processing algorithms were used for preliminary image processing, including edge detection, segmentation and other operations preparing the data for an analysis by the neural network, which has executed the safety assessment of the users 8 of the climbing wall 1. In addition, data analysis software was used to process the output data from the neural network, generate alerts, suggestions and reports.

### The third embodiment

The safeguard monitoring method for a climbing wall 1 has been implemented on a climbing wall 1 having a system configured to execute this method. The safeguard monitoring method is implemented with the use of this system, and meeting the objectives of the safeguard monitoring pattern presented in the first embodiment. Identically to the first embodiment:
- the climbing wall 1 with the belay location is monitored by cameras 2 with resolution of the recorded image in accordance with the UHD standard, that is with resolution of 3840 x 2160 pixels,
- the image from these cameras 2 is transmitted to a processing and control unit 3 provided with a processor and implementing in real time an image processing algorithm utilising deep machine learning, the processing and control unit itself being connected to a database 4 located on a local hard drive,
- an analysis of images from the cameras 2 is performed in the processing and control unit 3 while identifying and extracting specific items and their properties in the images from the cameras 2, as well as human figures of the users 8 of the climbing wall 1;
- and as a result of this analysis, messages are generated, which are usually warnings using the following to this end: lamps 5, speakers 6 and displays 7 present on the climbing wall 1.

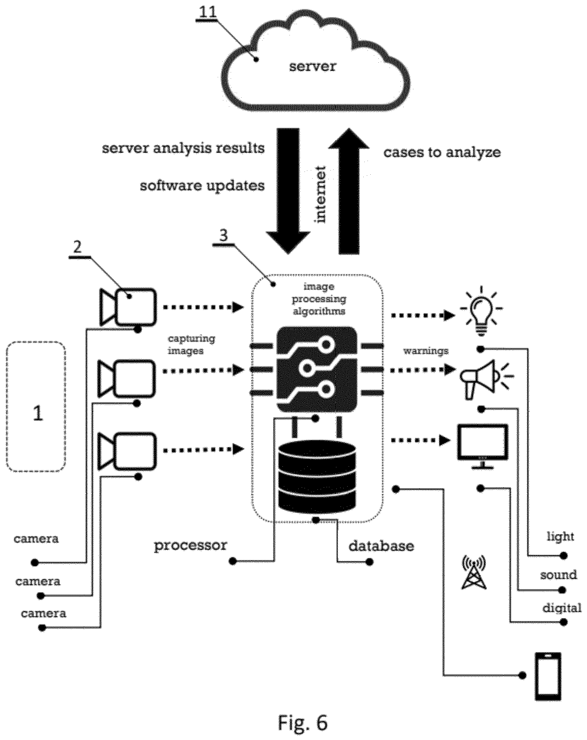

Additional functionalities have been implemented in the processing and control unit 3 (fig. 6). The processing and control unit is provided with additional subassemblies handling communication in wireless network standards, for example Wi-Fi. At the same time, the personnel of the climbing wall 1 has been provided with mobile devices, telephones with an application communicating with the processing and control unit 3. The warning signals generated by the processing and control unit 3 are transmitted via a wireless network to the mobile devices of the personnel of the climbing wall 1. In the embodiment, messages with information about an emergent dangerous incident, and the location on the climbing wall 1 where the dangerous incident has occurred, are generated on the personnel's mobile devices.

Communication in the wireless network standard has also been used to connect the processing and control unit 3 via the Internet to a remote server 11. The processing and control unit 3 transmits images of the climbing wall 1 and the users 8 to a remote server 11, for example every specified time interval, for example every 6 hours, or even in real time. On the remote server 11, the images are additionally analysed, with the correct and incorrect safety patterns on the climbing wall extracted from them. In particular, an analysis aimed at the identification and extraction of items and their properties, which may be considered a safety threat, or incidents considered by the image processing algorithms of the processing and control unit 3 as potentially dangerous, and which in fact posed no threat, is performed on the remote server 11.

On the remote server 11, the figures of the users 8 of the climbing wall 1 as well as the items and their properties are additionally extracted and identified while analysing the correct safety patterns. On the remote server 11, these patterns are also collected and used for constant improvement of the patterns in the database 4. Due to such an operating pattern, it is possible to collect and analyse the data globally, from numerous different climbing walls. This considerably increases the set of available data, with which the machine learning algorithms may work. Over time, this streamlines the operation and response of the algorithms of the processing and control unit 3. The results of additional analyses as well as updates of the software and the database 4 are transmitted from the server 11 to the processing and control unit 3.

Further analyses of the information collected on the climbing wall may be performed on the server 11, using additional artificial intelligence algorithms, or the individual incidents may be selected for a typical analysis. To this end, the processing and control unit 3 is configured such that, in the event of detecting an incorrect safety pattern and following the generation of a warning, the processing and control unit 3 saves the place, time and context of the detection of this incorrect safety pattern. This allows for basing further analyses on a larger amount of data. Therefore, not only are the items and their properties affecting the safety of the users 8 identified and extracted from the digital image, but so are the circumstances of these incidents. For example, this may allow for finding and identifying the external factors which could have caused a dangerous incident on the climbing wall.

When the image from the cameras is transmitted to the remote server 11 in real time, it is also possible to use the computing power of the remote server 11 to process the received data stream and analyse the situation on the climbing wall 1 on the remote server 11 in real time. Assuming that the remote server 11 may have a much higher computing power than local processing and control units 3, this provides additional possibilities of analysis and increases the probability of detecting undesirable and dangerous situations, and information about the detected patterns may be transmitted to local servers - the processing and control units 3 - in real time. An analysis performed on the remote server 11 even in real time is subject to the risk of losing the connection between the processing and control unit 3 and the remote server 11. For this reason, the processing and control unit 3 performs an analysis of the image from the cameras 2 at all times and regardless of the status of the connection to the remote server 11, ensuring safety on the climbing wall 1.

In alternative embodiments, the computing power of the processing and control unit 3 may be low and intended primarily for controlling warning devices and transmitting data to a remote server. In such configuration, the remote server 11 analyses images and safety patterns, serving the primary function of a processing and control unit 3. In the event of detecting a safety threat, the remote server 11 communicates with the processing and control unit 3 in order to warn the users of the climbing wall 1.

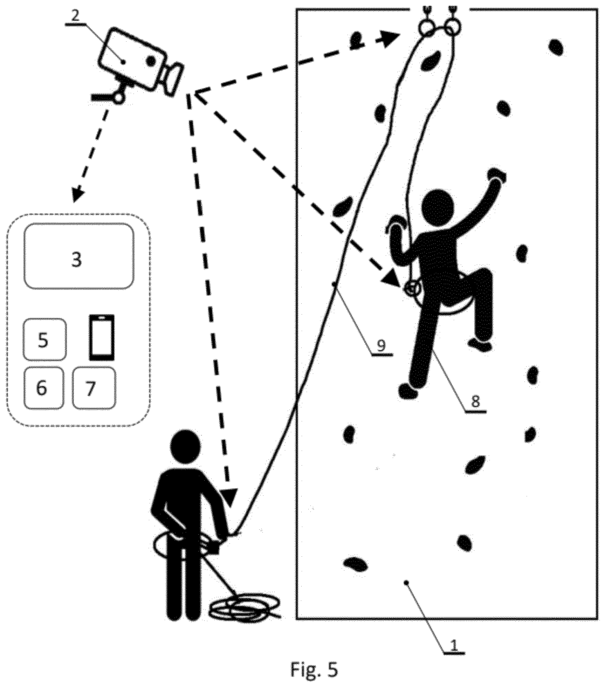

Like in the previous embodiments, the processing and control unit 3 is configured to process the image from the cameras 2 and assess the safety of the persons climbing the climbing wall. In the digital image of the climbing wall 1 (fig. 5), the image processing algorithm in the processing and control unit 3 identifies and extracts the items and their properties, assessing the safety of a two-person climbing team, in which the climber climbs with a top belay. In the image from the cameras 2, the processing and control unit 3 extracts the users 8: the climbing person and the belaying person. For safety assessment purposes, the processing and control unit 3 identifies and extracts the belaying person and the belay device as well as the climber's climbing harness in the image from the cameras 2, identically as presented in the second embodiment. In this embodiment, the top belay station is identified and extracted for the climber, while checking whether the rope 9 is correctly attached and runs across this station. The identification and extraction of improperly closed climbing carabiners or the use of just one carabiner with no additional safeguards cause the activation of an alarm, which like in the previous embodiments means switching the lamp 5 to a red light and generating an acoustic warning and a message on the display. Activation of the alarm also causes the transmission of a digital message to the wall personnel, comprising information about the dangerous incident and its location in the area of the climbing wall 1.

In order to take full advantage of the processing and control unit 3 and the remote server 11, the personnel of the climbing wall 1 has access to software allowing for the data to be displayed in real time, for receiving alerts, visualisation and access to analyses and reports on mobile and desktop devices. This software has a dedicated part with detailed reviews, statistics and the ability to manage the alerts.

Regardless of the embodiment, a system used to implement the safeguard monitoring method for a climbing wall may have the form of a single housing, in which all the devices have been installed. Therefore, cameras 2 monitoring the climbing wall 1, the processor of a processing and control unit 3, the hard drive of a database 4 as well as alarm and warning devices are disposed in the housing.

Also regardless of the embodiment, a system used to implement the safeguard monitoring method for a climbing wall may have a decentralised form. In the vicinity of the climbing wall 1 there may be cameras 2, which would be connected in a wired or wireless manner to a processing and control unit 3 placed in a special room along with the hard disk of a database 4. Alarm and warning devices can then be placed in an arbitrarily selected place of the climbing wall 1, taking into account simplicity and the reliability of communication with the users. However, in this case it is required to connect them to the processing and control unit 3.

Obviously, regardless of the embodiment, there are necessary procedures of calibration and testing of method for monitoring safeguards of a climbing wall 1 and the devices used in this method. Regular calibrations allow the data collection equipment, in particular the camera 2, to work correctly and provide precise data. On the other hand, regular tests of the system are to include simulations of various climbing scenarios, in order to make sure that the algorithms work correctly and are capable of efficient detection of potential threats.

## Claims

1. A method for monitoring safeguards of a climbing wall, in which a climbing wall (1) with a belay location is monitored by at least one camera (2), and the image from this camera (2) is transmitted to a processing and control unit (3) connected to a database (4), followed by an analysis of the images from the camera (2) at least with an image processing algorithm, and, as a result of this analysis, messages selected from light-based, acoustic or digital messages are generated, **characterised in that**:
- correct and incorrect safety patterns on the climbing wall (2) are stored in the database (4),
- and the processing and control unit (3) is configured to process the image from the camera (2) and assess the safety of the users (8) of the climbing wall (1), by the identification and extraction of patterns and their comparison with the patterns stored in the database (4).

2. The method for monitoring safeguards according to claim 1, **characterised in that** the processing and control unit (3) uses deep machine learning, preferably artificial neural networks taught by means of at least one of the methods chosen among the following methods:
- expert-based, involving the marking and categorisation of the recorded images, including the images and videos from climbs on the climbing walls;
- automatic, involving the teaching of the models by means of images along with a description of the taught patterns generated by simulation systems, creating various climbing and belaying scenarios on the climbing wall, including those taking into account various angles of view of the cameras;
- semiautomatic, involving motion capture methods or methods of reprojection over images from other cameras.

3. The method for monitoring safeguards according to any of the claims from 1 to 2, **characterised in that** the processing and control unit (3) identifies and extracts at least one item chosen from a group comprising: a climbing harness with a central connector, a belay device, belay points, a top belay station, and an auto belay belt carabiner.

4. The method for monitoring safeguards according to any of the claims from 1 to 3, **characterised in that** the database (4) collects and stores the correct patterns of: belay knots for tying the rope, tying the rope into the upper and lower link of the harness, fastening the rope into the belay device, holding the belay device, fastening the rope into the consecutive belay points, tying the rope into the top belay station, and the processing and control unit is adjusted to identify and extract these patterns from a digital image from the camera (2).

5. The method for monitoring safeguards according to any of the claims from 1 to 4, **characterised in that**
- the correctness of tying the rope (9) into the climbing harness or fastening the rope (9) into the belay device is extracted and identified from the digital images from the cameras on the climbing wall and in the area of the belay location;
- the climber's figure is extracted and identified from the digital image from the cameras (2), and at the same time the correctness of fastening the rope in the consecutive belay points is extracted and identified from the digital images from the cameras (2) over the entire height of the climbing wall, as the climber advances along the height of the climbing wall (1);
- the figure of the belaying person is extracted and identified from the digital image from the cameras (2), and the correctness of holding the belay device is being continuously extracted and identified.

6. The method for monitoring safeguards according to any of the claims from 1 to 5, **characterised in that**, in the event of detecting an incorrect safety pattern, the processing and control unit (3) saves the place, time and context of detecting this incorrect safety pattern.

7. The method for monitoring safeguards method according to any of the claims from 1 to 6, **characterised in that** the processing and control unit (3) transmits images of the climbing wall (1) and the users to a remote server (11), wherein on the remote server (11) the patterns are additionally analysed, and in particular the figures of the persons as well as the items and their properties affecting the safety of the users of the climbing wall are extracted and identified, and the remote server (11) collects correct and incorrect safety patterns and uses them to continuously improve the patterns of the database (4).

8. The method for monitoring safeguards according to claim 6, **characterised in that** the processing and control unit (3) transmits images of the climbing wall (1) and the users to the remote server (11) in real time, and the remote server (11) is supplementarily configured to process the image from the camera (2) and assess the safety of the users (8) of the climbing wall (1).

9. The method for monitoring safeguards according to any of the claims from 1 to 8, **characterised in that** the figure of the belaying person and the characteristics representing fatigue or the lack of concentration of the belaying person present in the belay location are extracted and identified from the digital image during the identification of safety.

10. The method for monitoring safeguards according to any of the claims from 1 to 9, **characterised in that**, in the event of detecting an incorrect safety pattern, the processing and control unit (3) transmits digital information to the mobile devices of the climbing wall personnel.

11. The method for monitoring safeguards according to any of the claims from 1 to 10, **characterised in that** the processing and control unit (3) controls the lighting assigned to climbing routes and the sound sources, and in the event of:
- detecting an incorrect safety pattern, the processing and control unit (3) at least switches the lighting to red and generates an acoustic warning,
- detecting a correct safety pattern, the processing and control unit (3) at least switches the lighting to green, or to another predetermined colour different from red.

12. The method for monitoring safeguards according to any of the claims from 2 to 11, **characterised in that** the artificial neural networks:
- are first taught to identify: the belay location, the belayer, the climber, the belayer's harness, the climber's harness, the rope, the belayer's device, the central connector of the belayer's harness, the loop of the climber's harness for tying the rope, the central connector of the climber's harness for fastening the auto belay belt carabiner, the belay points along the climbing route together with quickdraws and/or carabiners,
- and subsequently they are taught the safety patterns and the interdependencies between the items used to safeguard the climbing on climbing walls.

13. A system configured to execute the method for monitoring safeguards of a climbing wall (1) according to any of the claims from 1 to 13.

14. The system according to claim 13, **characterised in that** it comprises at least one camera (2) with a minimum recording standard in HD quality, a processor constituting a part of the processing and control unit (3), a hard drive constituting the database (4), and a set of warning devices comprising a light source (5), a speaker (6) and a display (7).

15. The system according to claim 14, **characterised in that** it has means for communication and transmission of digital signals, in particular means for wireless communication with other devices, in particular with mobile devices.
